# EUROPÄISCHE PATENTSCHRIFT

(11) **EP 1 936 066 B1**
(45) Veröffentlichungstag und Bekanntmachung des Hinweises auf die Patenterteilung: **07.03.2012**
(21) Anmeldenummer: 07022660.0
(22) Anmeldetag: 22.11.2007
(51) Int. Cl.: E04F 13/08, F16B 5/01, F16B 5/02, F16B 13/00, F16B 37/12

(54) **Abstandshalter für die Befestigung eines Gegenstands an einer Wand mit Dämmschicht**
Spacer for fastening an object to a wall covered by an insulating layer
Entretoise pour la fixation d'un objet sur un mur doté d'une couche isolante

(30) Priorität: 22.12.2006 DE 102006061110
(43) Veröffentlichungstag der Anmeldung: 25.06.2008
(73) Patentinhaber: fischerwerke GmbH & Co. KG, 72178 Waldachtal (DE)
(72) Erfinder: Aaron, Daly, 72285 Pfalzgrafenweiler (DE)
(74) Vertreter: Suchy, Ulrich Johannes

(56) Entgegenhaltungen:
- EP-A- 0 935 075
- DE-A1-102005 022 449

## Beschreibung

Die Erfindung betrifft einen Abstandshalter für die Befestigung eines Gegenstands an einer eine Dämmschicht aufweisenden Wand, also an einem sog. Wärmedämmverbundsystem (WDVS), mit den Merkmalen des Oberbegriffs des Anspruchs 1.

Zur thermischen Isolierung werden Wände von heizbaren Gebäuden mit einer Wärmedämmschicht versehen, auf der in der Regel aus optischen Gründen und zum Schutz der Dämmschicht vor Witterungseinflüssen und vor mechanischer Beschädigung ein Putz aufgebracht ist. Zur Befestigung leichter Lasten wie beispielsweise Briefkästen und Lampen kann die Dämmschicht ausreichen. Zur Befestigung größerer Lasten wie beispielsweise einer Markise reicht die Festigkeit der beispielsweise aus Polystyrol bestehenden Dämmschicht nicht aus, hier muss eine Verankerung durch die Dämmschicht hindurch in der Wand erfolgen.

Zu diesem Zweck offenbart die DE 10 2005 022 449 A1 einen Abstandshalter, der aus einer Gewindestange als Ankerbolzen und einer auf ein Ende der Gewindestange aufgeschraubten Abstandshülse aus Kunststoff besteht. Die Gewindestange wird mit Mörtel in einem Bohrloch in der Wand verankert. Er steht aus der Wand in die Dämmschicht vor. Die Abstandshülse besteht wie erwähnt aus Kunststoff, ist also thermisch isolierend, sie verlängert die Gewindestange koaxial an deren hinterem Ende. Die Ankerhülse ist im Wesentlichen konisch und weist ein axiales Durchgangsloch mit einem Innengewinde größeren Durchmessers auf, mit dem die Abstandshülse auf das Ende der Gewindestange geschraubt ist, und einem Innengewinde kleineren Durchmessers, in das eine Befestigungsschraube zur Befestigung beispielsweise der Markise schraubbar ist. Zur Erzielung einer ausreichenden Festigkeit wird jeder Markisenarm mit zwei oder mehr Abstandshaltern befestigt. Eine Drehsicherung der Abstandshülse erfolgt durch Kontern mittels einer in die Abstandshülse eingeschraubten Madenschraube, die gegen das Ende der Gewindestange drückt. Die Drehsicherung der Abstandshülse auf der Gewindestange erfolgt also reibschlüssig. Da die Gewindestange mit Mörtel in der Wand verankert ist, muss zur Verankerung des Abstandshalters allenfalls ein vernachlässigbares Moment von der Abstandshülse auf die Ankerstange übertragen werden, wozu die Konterung mit der Madenschraube genügt. Dabei hat die Konterung den Vorteil einer axialen Verstellmöglichkeit der Abstandshülse auf der Gewindestange.

Aufgabe der Erfindung ist, einen Abstandshalter für die Befestigung eines Gegenstands an einer eine Dämmschicht aufweisenden Wand vorzuschlagen, der thermisch isoliert und der einem Drehmoment standhält, wie es beim Einschrauben in einen Spreizdübel auftritt.

Diese Aufgabe wird erfindungsgemäß durch die Merkmale des Anspruchs 1 gelöst. Der erfindungsgemäße Abstandshalter weist eine Schraube mit einem Isolierkörper an ihrem hinteren Ende auf. Mit der Schraube ist der Abstandshalter zur Verankerung in einen Dübel beispielsweise aus Kunststoff oder Metall in einem Bohrloch in einer Wand einschraubbar. Der Isolierkörper besteht aus einem thermisch isolierenden Werkstoff, beispielsweise aus Kunststoff. Er verlängert die Schraube koaxial über ihr hinteres Ende hinweg und vermeidet dadurch eine Kältebrücke. Der Isolierkörper ist im Wesentlichen ein Rotationskörper, womit gemeint ist, dass eine Mantelfläche des Isolierkörpers zumindest näherungsweise einen Rotationskörper bildet. Der Begriff "Rotationskörper" ist mehr anhand der Funktion, den Abstandshalter mit dem Isolierkörper mit einer Schraubbewegung in die Dämmschicht einzubringen, und weniger anhand der geometrischen Form zu verstehen. Die Schraubbewegung ist ein axialer Vorschub und gleichzeitig eine Drehbewegung bedingt durch das Einschrauben des Abstandshalters mit seiner Schraube in einen Dübel in der Wand. In seinem Umfang kann der Isolierkörper Ausnehmungen wie Mulden, Löcher, Rillen, Nuten oder Rippenzwischenräume aufweisen. Er soll trotzdem als Rotationskörper im Sinne der Erfindung verstanden werden. Nicht erforderlich ist, dass die Schraube einen Kopf an ihrem hinteren Ende aufweist, an dem der Isolierkörper angebracht ist.

Am hinteren Ende weist der Isolierkörper ein Einschraubloch zum Einschrauben einer Befestigungsschraube von hinten in den Abstandshalter auf. Das Einschraubloch dient zur Befestigung des zu befestigenden Gegenstandes am Abstandshalter mittels einer Befestigungsschraube. Auch wenn das Loch als Einschraubloch bezeichnet ist, muss es kein Innengewinde aufweisen und die Befestigung im Einschraubloch kann mittels eines Dübels erfolgen.

Zum Einschrauben des Abstandshalters in einen Dübel in der Wand weist der Isolierkörper einen Werkzeugsitz zu einem durch Formschluss drehfesten Ansetzen eines Drehwerkzeugs auf. Der Werkzeugsitz kann beispielsweise ein Schlitz oder Kreuzschlitz zum Ansetzen eines Schraubendrehers, ein Innenmehrkant oder Innenstern oder ein Außenmehrkant sein. Gemäß der Erfindung ist der Isolierkörper stoffschlüssig mit der Schraube verbunden, insbesondere mit der Schraube verklebt. Durch die stoffschlüssige Verbindung wird eine gleichmäßige und über die gesamte vom Isolierkörper umschlossene Umfangsfläche am hinteren Ende der Schraube verteilte Momenten- bzw. Kraftübertragung vom Isolierkörper auf die Schraube erreicht. Dadurch ist eine hohe Momentenübertragung möglich, die die Festigkeit des Isolierkörpers übersteigen kann. Durch den Stoffschluss zwischen Isolierkörper und Schraube lässt sich ein Drehmoment vom Isolierkörper auf die Schraube übertragen, das zum Einschrauben der Schraube in einen Spreizdübel und zum Aufspreizen des Spreizdübels in einem Bohrloch in einer Wand erforderlich ist, auch wenn das Bohrloch eng in Bezug auf den Spreizdübel und/oder die Wand unnachgiebig wie beispielsweise Beton, d.h. das Einschraubmoment der Schraube des Abstandshalters in den Spreizdübel hoch ist. Die stoffschlüssige Verbindung gleicht Herstellungstoleranzen des Isolierkörpers und der Schraube aus. Gleichzeitig gewährleistet sie, dass es beim Justieren des Abstandshalters durch leichtes Herausschrauben aus dem Spreizdübel nicht zum Lösen von Schraube und Isolierkörper kommt. Dies hätte nämlich zur Folge, dass beim Einschrauben einer Befestigungsschraube in das Einschraubloch des Isolierkörpers dieser ungewollt mitdrehen und dadurch axial verstellt würde. Auch vermeidet die stoffschlüssige Verbindung, dass es durch das Ausschrauben der Befestigungsschraube zu einem Lösen der Verbindung kommt.

Erfindungsgemäß weist die Schraube an ihrem hinteren Ende ein Gewinde auf, auf das der Isolierkörper zusätzlich zu seiner stoffschlüssigen Verbindung geschraubt ist. Die Verbindung des Isolierkörpers mit der Schraube ist dadurch weiter verbessert. Zudem lässt sich durch die Schraubverbindung beispielsweise eine sog. Stockschraube, d.h. eine handelsübliche Schraube, also eine Schraube ohne Schraubenkopf und mit einem Gewinde an ihrem vorderen Ende und einem Gewinde an ihrem hinteren Ende für den erfindungsgemäßen Abstandshalter verwenden. Es ist keine Spezialschraube erforderlich.

Eine Weiterbildung sieht vor, dass der Isolierkörper und/oder die Schraube einen Axialanschlag aufweist, der eine Einschraublänge der Schraube in den Isolierkörper begrenzt, womit auch umgekehrt ein Aufschrauben des Isolierkörpers auf die Schraube gemeint ist. Durch Festlegung der Einschraublänge mittels des Axialanschlags wird die vom Isolierkörper umhüllte Fläche am hinteren Ende der Schraube und damit die Fläche, über die durch die stoffschlüssige Fläche des Isolierkörpers mit der Schraube ein Moment bzw. eine Kraft vom Isolierkörper auf die Schraube übertragen wird, festgelegt. Außerdem trägt der Axialanschlag in Verbindung mit der Schraubverbindung des Isolierkörpers mit der Schraube zur Momentenübertragung vom Isolierkörper auf die Schraube bei.

Erfindungsgemäß ist vorgesehen, dass der Isolierkörper ein koaxiales Loch an seinem vorderen Ende aufweist, mit dem er auf das Gewinde am hinteren Ende der Schraube geschraubt ist. Das Loch des Isolierkörpers muss ursprünglich kein Gewinde aufweisen, das Gewinde der Schraube kann sich in das Loch im vorderen Ende des Isolierkörpers schneiden. Das Loch des Isolierkörpers weist erfindungsgemäß Klebstofftaschen auf, bei denen es sich um beispielsweise mulden-, rillen- oder nutförmige Vertiefungen oder auch Rippenzwischenräume handeln kann. Die Klebstofftaschen bilden ein Klebstoffreservoir beim Einkleben der Schraube und bewirken zudem eine gute Klebstoffverteilung beim Einschrauben der Schraube in das koaxiale Loch am vorderen Ende des Isolierkörpers.

Eine Ausgestaltung der Erfindung sieht längs verlaufende Nuten oder Rippen im Einschraubloch im hinteren Ende des Isolierkörpers vor. Dabei müssen die Nuten oder Rippen nicht achsparallel verlaufen, sondern können auch in einem Winkel zu einer achsparallelen Richtung, also beispielsweise wellen- oder wendelförmig verlaufen. Das Einschrauben einer gewindeschneidenden Schraube in den Isolierkörper des Abstandshalters ist bei dieser Ausgestaltung der Erfindung erleichtert. Außerdem ist eine größere Durchmessertoleranz der Befestigungsschraube möglich.

Eine bevorzugte Ausgestaltung der Erfindung sieht eine Ausbildung des Isolierkörpers als Lochfräser vor. Das bedeutet, der Isolierkörper weitet beim Einschrauben der Schraube in einen Dübel in der Wand ein Loch im Dämmstoff vom Durchmesser der Schraube auf einen Durchmesser des Isolierkörpers auf.

Die Erfindung wird nachfolgend anhand eines in der Zeichnung dargestellten Ausführungsbeispiels näher erläutert. Es zeigen:
- Figur 1: einen Abstandshalter gemäß der Erfindung in verankertem Zustand;
- Figur 2: einen Isolierkörper des Abstandshalters aus Figur 1 im Achsschnitt;
- Figur 3: den Isolierkörper aus Figur 2 in perspektivischer Darstellung schräg von vorn; und
- Figur 4: den Isolierkörper aus Figur 2 in perspektivischer Darstellung schräg von hinten.

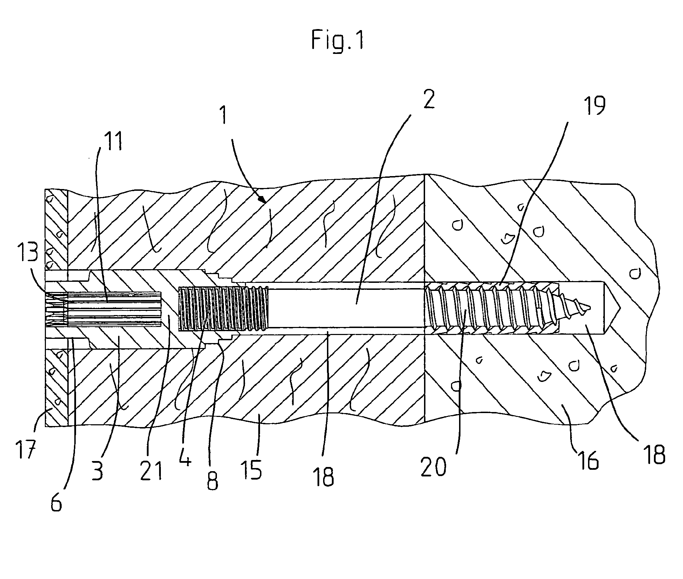

Der in Figur 1 dargestellte, erfindungsgemäße Abstandshalter 1 weist eine Schraube 2 und einen Isolierkörper 3 auf. Die Schraube 2 ist eine sog. Stockschraube, sie weist ein Maschinengewinde 4 an einem hinteren Ende und ein Holzschraubengewinde 20 an einem vorderen Ende auf. Der Isolierkörper 3 ist auf das Maschinengewinde 4 am hinteren Ende der Schraube 2 geschraubt. Die Schraube 2 weist keinen Schraubenkopf auf.

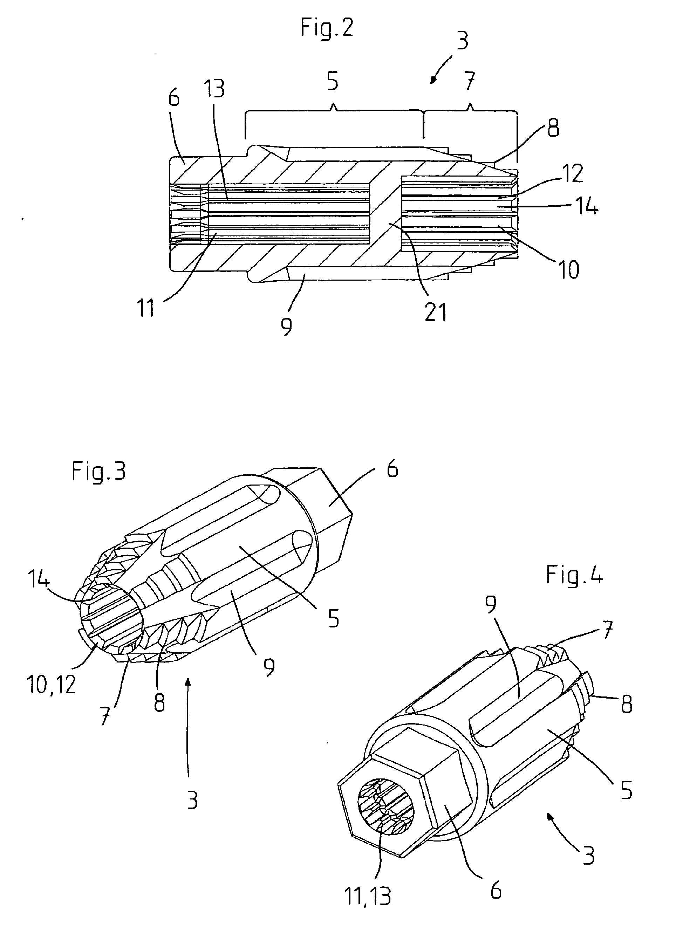

Der Isolierkörper 3 ist hülsenförmig und besteht aus Kunststoff, also aus einem thermisch isolierenden Werkstoff. Er ist in Figuren 2-4 als Einzelteil dargestellt. Der Isolierkörper 3 ist im Wesentlichen ein Rotationskörper, er weist einen Mittelabschnitt 5 mit einer gedachten zylindrischen Mantelfläche auf. Nach vorn verjüngt er sich kegelstumpfförmig. An einem hinteren Ende weist der Isolierkörper 3 einen Sechskant 6 auf, dessen Eckmaß kleiner als ein Durchmesser des zylindrischen Abschnitts 5 ist. Der Sechskant 6 bildet einen Werkzeugsitz zu einem durch Formschluss drehfesten Ansetzen eines nicht dargestellten Drehwerkzeugs wie beispielsweise einer Sechskantnuss oder einem Rohrschlüssel. Das Eckmaß des Sechskants 6 ist um so viel kleiner als ein Durchmesser des zylindrischen Abschnitts 5, dass eine auf den Sechskant 6 aufgesetzte, nicht dargestellte Sechskantnuss oder ein Rohrschlüssel nicht nach außen über die gedachte Mantelfläche des zylindrischen Abschnitts 5 vorsteht. Der kegelstumpfförmige Abschnitt 7 weist treppen- oder sägezahnartige Schneiden 8 auf, durch die der Isolierkörper 3 als Lochfräser ausgebildet ist. Über den zylindrischen und den kegelstumpfförmigen Abschnitt 5, 7 erstrecken sich Rillen 9 in Längsrichtung des Isolierkörpers 3, die Bohrmehinuten bilden. Trotz dieser Unregelmäßigkeiten kann der Isolierkörper 3 als Rotationskörper aufgefasst werden.

An seinem vorderen, der Schraube 2 zugewandten Ende weist der Isolierkörper 3 ein koaxiales Einschraubloch 10 auf, in das die Schraube 2 mit dem Maschinengewinde 4 an ihrem hinteren Ende eingeschraubt ist bzw. umgekehrt ist der Isolierkörper 3 auf das Maschinengewinde 4 am hinteren Ende der Schraube 2 geschraubt. In seinem hinteren, der Schraube 2 abgewandten Ende weist der Isolierkörper 3 ein weiteres, ebenfalls koaxiales Einschraubloch 11 auf, dessen Durchmesser im Ausführungsbeispiel kleiner als der Durchmesser des Einschraublochs 10 ist. Das ist allerdings nicht zwingend für die Erfindung. Die beiden Einschraublöcher 10, 11 sind durch eine Querwand 21 voneinander getrennt. Die Querwand 21 bildet einen Axialanschlag, der eine Einschraublänge der Schraube 2 in den Isolierkörper 3 begrenzt. Beide Einschraublöcher 10, 11 weisen achsparallel verlaufende Rippen 12, 13 auf. Außerdem ist der Isolierkörper 3 durch Kleben stoffschlüssig mit der Schraube 2 verbunden. Rippenzwischenräume zwischen den Rippen 12 im Einschraubloch 10 bilden Klebstofftaschen 14, die vor dem Einschrauben der Schraube 2 mit Klebstoff gefüllt sind. Durch Verdrängung des Klebstoffs beim Einschrauben der Schraube 2 wird ein Raum zwischen dem Maschinengewinde 4 der Schraube 2 und dem Einschraubloch 10 des Isolierkörpers 3 vollständig mit Klebstoff ausgefüllt, die Rippen 12 und die Klebstofftaschen 14 bewirken ein Umfließen des Maschinengewindes 4 mit Klebstoff beim Einschrauben der Schraube 2 in den Isolierkörper 3 und das vollständige Ausfüllen des Raums zwischen dem Maschinengewinde 4 und dem Einschraubloch 10. Auf diese Weise wird eine gute und großflächige Verbindung zwischen dem Isolierkörper 3 und der Schraube 2 durch den Stoffschluss mit dem Klebstoff bewirkt, so dass eine hohe Momenten- und Kraftübertragung vom Isolierkörper 3 auf die Schraube 2 möglich ist. Die Rippenzwischenräume formen "Klebstofflinien", die hohe Scherkräfte und damit ein hohes Moment vom Isolierkörper 3 auf die Schraube 2 übertragen können.

Das Einschraubloch 11 im hinteren Ende des Isolierkörpers 3 dient zum Eindrehen einer nicht dargestellten, selbstschneidenden, beispielsweise Holzschraube. Die Rippen 13 erleichtern das Einschrauben der Schraube und vergrößern eine Durchmessertoleranz.

Der Abstandshalter 1 dient zur Befestigung eines nicht dargestellten Gegenstands wie beispielsweise einer Markise an einer eine Dämmschicht 15 aufweisenden Wand 16. Auf der Dämmschicht 15 ist eine Putzschicht 17 angebracht. Zum Setzen wird ein Bohrloch 18 durch die Putzschicht 17 und die Dämmschicht 15 in die Wand 16 gebohrt. In das Bohrloch 18 in der Wand 16 wird ein Spreizdübel 19 beispielsweise aus Kunststoff eingebracht. Der Abstandshalter 1 wird mit seinem vorderen Ende, d.h. mit dem Holzschraubengewinde 20 voraus in das Bohrloch 18 eingebracht und zum Einschrauben in den Spreizdübel 19 an seinem Sechskant 6 drehend angetrieben. Die Schraube 2 schraubt sich mit ihrem Holzschraubengewinde 20 in den Spreizdübel 19 ein, wodurch der Spreizdübel 19 aufgespreizt und der Abstandshalter 1 in der Wand 16 verankert wird. Durch den drehenden Antrieb beim Einschrauben in den Spreizdübel 19 vergrößert der Isolierkörper 3, der mit seinen Schneiden 8 als Lochfräser ausgebildet ist, das Bohrloch 18 auf den Durchmesser des Isolierkörpers 3, der als Rotationskörper ausgebildet ist. Das Einschrauben des Abstandshalters 1 in den Spreizdübel 19 ist beendet, wenn das hintere, den Sechskant 6 aufweisende Ende des Isolierkörpers 3 bündig mit der Putzschicht 17 abschließt oder im Putz 17 versenkt ist. Im Einschraubloch 11 im hinteren Ende des Isolierkörpers 3 kann beispielsweise eine nicht dargestellte Konsole einer Markise mit einer ebenfalls nicht dargestellten selbstschneidenden, beispielsweise Holzschraube befestigt werden. Die Verankerung der Markise erfolgt mittels des Abstandshalters 1 stabil in der Wand 16 und nicht in der Dämmschicht 15, so dass auch ein schwerer Gegenstand wie beispielsweise eine Markise befestigt werden kann.

## Patentansprüche

1. Abstandshalter, für die Befestigung eines Gegenstands an einer eine Dämmschicht (15) aufweisenden Wand (16), wobei der Abstandshalter (1) eine Schraube (2) aufweist und einen Isolierkörper (3), der im Wesentlichen ein Rotationskörper ist, der koaxial zur Schraube (2) und die Schraube (2) über ihr hinteres Ende hinweg verlängernd am hinteren Ende der Schraube (2) angebracht ist, der ein Einschraubloch (11) an einem hinteren Ende zum Einschrauben einer Befestigungsschraube von hinten in den Abstandshalter (1) und einen Werkzeugsitz (6) zu einem durch Formschluss drehfesten Ansetzen eines Drehwerkzeugs aufweist, wobei die Schraube (2) ein Gewinde (4) an ihrem hinteren Ende aufweist, der Isolierkörper (3) auf die Schraube (2) geschraubt ist und der Isolierkörper (3) ein koaxiales Einschraubloch (10) an seinem vorderen Ende aufweist, mit dem er auf das Gewinde (4) am hinteren Ende der Schraube (2) geschraubt ist, **dadurch gekennzeichnet, dass** der Isolierkörper (3) stoffschlüssig mit der Schraube (2) verbunden ist, und dass das Einschraubloch (10) Klebstofftaschen (14) aufweist.

2. Abstandshalter nach Anspruch 1, **dadurch gekennzeichnet, dass** der Isolierkörper (3) mit der Schraube (2) verklebt ist.

3. Abstandshalter nach Anspruch 1, **dadurch gekennzeichnet, dass** der Isolierkörper (3) und/oder die Schraube (2) einen Axialanschlag (21) aufweist, der eine Einschraublänge des Isolierkörpers (3) auf die Schraube (2) begrenzt.

4. Abstandshalter nach Anspruch 1, **dadurch gekennzeichnet, dass** das Einschraubloch (11) im hinteren Ende des Isolierkörpers (3) längs verlaufende Nuten oder Rippen (13) aufweist.

5. Abstandshalter nach Anspruch 1, **dadurch gekennzeichnet, dass** der Isolierkörper (3) als Lochfräser (8) ausgebildet ist.

## Claims

1. Spacer for attachment of an article to a wall (16) having an insulating layer (15), the spacer (1) having a screw (2) and having an insulating body (3), which is essentially a rotational body, which is mounted at the rear end of the screw (2) coaxially with respect to the screw (2) and extending the screw (2) beyond its rear end, which insulating body (3) has a screw-in hole (11) at its rear end for screwing a fixing screw into the spacer (1) from the rear and a tool seat (6) for application of a rotary tool so as to be interlockingly secured against relative rotation, the screw (2) having a thread (4) at its rear end, the insulating body (3) being screwed onto the screw (2) and the insulating body (3) having at its front end a coaxial screw-in hole (10) with which it is screwed onto the thread (4) at the rear end of the screw (2), **characterized in that** the insulating body (3) is joined to the screw (2) by means of a material-bonded connection, and the screw-in hole (10) has adhesive receptacles (14).

2. Spacer according to claim 1, **characterized in that** the insulating body (3) is adhesively bonded to the screw (2).

3. Spacer according to claim 1, **characterized in that** the insulating body (3) and/or the screw (2) has/have an axial stop (21) which defines the extent to which the insulating body (3) is screwed onto the screw (2).

4. Spacer according to claim 1, **characterized in that** the screw-in hole (11) in the rear end of the insulating body (3) has longitudinal grooves or ribs (13).

5. Spacer according to claim 1, **characterized in that** the insulating body (3) is in the form of a hole cutter (8).

## Revendications

1. Écarteur pour la fixation d'un objet sur un mur (16) présentant une couche d'isolation (15), sachant que l'écarteur (1) présente une vis (2) et un corps isolant (3) qui est pour l'essentiel un corps de révolution, qui est installé à l'extrémité arrière de la vis (2) coaxialement à la vis (2) et en prolongeant la vis (2) au-delà de l'extrémité arrière de celle-ci, et qui présente à une extrémité arrière un trou de vissage (11) pour visser de l'arrière une vis de fixation dans l'écarteur (1), et un siège d'outil (6) pour mettre en place en solidarité de rotation par engagement positif un outil de vissage, sachant que la vis (2) présente un filetage (4) à son extrémité arrière, que le corps isolant (3) est vissé sur la vis (2) et que le corps isolant (3) présente à son extrémité avant un trou de vissage coaxial (10) par lequel il est vissé sur le filetage (4) à l'extrémité arrière de la vis (2), **caractérisé en ce que** le corps isolant (3) est assemblé par liaison de matière à la vis (2), et **en ce que** le trou de vissage (10) présente des poches de colle (14).

2. Écarteur selon la revendication 1, **caractérisé en ce que** le corps isolant (3) est assemblé par collage à la vis (2).

3. Écarteur selon la revendication 1, **caractérisé en ce que** le corps isolant (3) et/ou la vis (2) présentent une butée axiale (21) qui limite une longueur de vissage du corps isolant (3) sur la vis (2).

4. Écarteur selon la revendication 1, **caractérisé en ce que** le trou de vissage (11) ménagé dans l'extrémité arrière du corps isolant (3) présente des rainures ou nervures (13) s'étendant longitudinalement.

5. Écarteur selon la revendication 1, **caractérisé en ce que** le corps isolant (3) est réalisé sous forme de fraise d'entrée (8).
